# EUROPEAN PATENT SPECIFICATION

(11) **EP 2 783 029 B1**
(45) Date of publication and mention of the grant of the patent: **21.06.2017**
(21) Application number: 12788217.3
(22) Date of filing: 21.11.2012
(51) Int. Cl.: D01F 1/10, D01F 6/04, D01F 8/06

(54) **UHMWPE FIBER**
UHMWPE-FASER
FIBRE DE UHMWPE

(30) Priority: 21.11.2011 EP 11189907
(43) Date of publication of application: 01.10.2014
(60) Divisional application: 16199892.7
(73) Proprietor: DSM IP Assets B.V., 6411 TE Heerlen (NL)
(72) Inventor: VLASBLOM, Martin Pieter, NL-6100 AA Echt (NL); GIJSMAN, Pieter, NL-6100 AA Echt (NL)
(74) Representative: Meessen, Patric Holger
(86) International application number: PCT/EP2012/073197
(87) International publication number: WO 2013/076124

(56) References cited:
- EP-A2- 0 343 863
- WO-A1-2008/131925
- WO-A1-2010/057982
- WO-A2-2009/043597
- WO-A2-2009/060043

## Description

### BACKGROUND OF THE INVENTION

### 1. Field of the Invention

The present invention relates to gel-spun polyolefin (PO) fibers having suitable stability and in particular a satisfactory UV stability and/or bio stability; the use thereof in, for example, ropes, fishing lines and nets, medical devices; and a process for making such fibers.

### 2. Description of the Related Art

Gel-spun PO fibers, in particular gel-spun high performance polyethylene (HPPE) fibers, are generally considered to be relatively stable in various environments and in particular when exposed to UV light. However, under certain circumstances the gel-spun PO fibers show a loss in tenacity, which may lead to a reduced life time. These circumstances can in particular occur when such fibers are used in ropes, fishing lines or fishing nets, architectural structures, or in cargo nets, straps and restraints used in shipping and aviation.

Also, when using gel-spun PO fibers in medical devices, living tissue and particularly the human body may represent a harsh environment, which for long term applications could lead to loss of performance of the fibers. Matsumori et al. (Clinical Biomechanics 25(2): 173-176, 2010) shows for example a 70% decrease in tensile strength of a polyethylene fiber based suture after 1 year intramuscular implantation in rabbits.

One manner of stabilizing gel-spun PO fibers is known from EP 0 343 863, wherein it is disclosed a process for producing a fiber by spinning a composition comprising an ultrahigh molecular weight polyolefin (UHMWPO), a diluent and a phenolic stabilizer in a specific ratio. Although not demonstrated with any experimental data, according to this document the gel-spun UHMWPO fibers manufactured thereof have excellent thermal stability during molding and long-term heat stability. In addition to the phenolic stabilizer, the composition used to spin said fibers may also include organic phosphite stabilizers, organic thioether stabilizers, hindered amine stabilizers and/or metal salts of higher fatty acids. The process disclosed in EP 0 343 863 for manufacturing said gel-spun UHMWPO fibers is a process wherein a solution of UHMWPO containing one or more of the above mentioned stabilizers and a suitable diluent for UHMWPO is spun through a spinneret to obtain UHMWPO filaments and subsequently subjecting said filaments to an extraction process wherein the diluent is extracted with the help of a second diluent.

It was however observed that although the composition used to manufacture the fibers contained a relatively high amount of stabilizers, e.g. of between 0.005 to 5 parts by weight based on 100 parts by weight of the total amount of UHMWPO, after carrying out the process disclosed in EP 0 343 863, the amount of stabilizers left in the fibers was dramatically lowered. In most cases, it was observed that the amount of stabilizers left in the gel-spun UHMWPO fibers was so low that said fibers showed little stabilization, if any.

There is accordingly a need for gel-spun PO fibers that are optimally stabilized. The object of the invention may therefore be to provide such fibers and a process for making them, as well as products containing them.

### SUMMARY OF THE INVENTION

The present invention provides a high performance gel-spun fiber with a tenacity of at least 1.5 N/tex comprising a polyolefin polymer forming a fiber body, wherein the polyolefin is ultrahigh molecular weight polyethylene (UHMWPE), wherein a stabilizer is present inside the fiber body, characterized in that the stabilizer is a hindered amine stabilizers (HAS) and the amount of said stabilizer is between 0.1 and 10 parts by weight based on 100 parts by weight of the amount of the polyolefin polymer forming said fiber body.

To the inventors' knowledge, a gel-spun PO fiber such as the one according to the invention was never produced hitherto. Although known gel-spun PO fibers containing stabilizers were previously reported, the amount of stabilizers present inside thereof was too low to be effective, especially over an extended period of time. In particular the inventors noticed for the first time that although using spinning solutions comprising a large amount of stabilizers, at the end of the gel-spinning process little of said amount remains in the obtained gel-spun fibers.

It has also been surprisingly discovered that incorporation of stabilizers and in particular UV stabilizers in the fiber body is made effective by the present invention. Moreover, said stabilizers optimally protect the fiber against degradation, in particular UV-light degradation, while having an acceptable influence on the mechanical properties, e.g. tensile strength, thereof.

Within the context of the present invention, fibers are understood to mean elongated bodies of indefinite length and with length dimension much greater than their transversal dimensions, e.g. width and thickness. The term fiber may also include a monofilament, a ribbon, a strip or a tape and the like, and can have regular or irregular cross-section. The fibers may have continuous lengths, known in the art as filaments, or discontinuous lengths, known in the art as staple fibers. A yarn according to the present invention is an elongated body comprising a plurality of fibers.

By a gel-spun fiber is herein understood a fiber manufactured by spinning a solution comprising a polymer and a solvent for said polymer. The spinning of the solution may be carried out by extruding said solution through a spinneret containing one or more spinning apertures. Unless otherwise indicated, the terms "fiber" and "gel-spun fiber" are used interchangeably to describe the present invention. Particularly preferred are gel-spun fibers, which are spun from a solution containing the polyolefin and a solvent for polyolefin, which can be extracted or removed, from the fiber by evaporation, e.g. naphthenes such as decaline, tetralin or methylcyclohexane. It was observed that for such fibers a more optimal incorporation of the stabilizers is achieved.

The gel-spun fibers of the invention are high performance gel-spun fibers, i.e. fibers with a tenacity of at least 1.5 N/tex, preferably at least 2.0 N/tex, more preferably at least 2.5 N/tex or even at least 3.0 N/tex. There is no reason for an upper limit of the tenacity of the fibers, but fibers typically having a tenacity of at most about 5 to 6 N/tex may be manufactured. Generally such high-strength gel-spun fibers also have a high tensile modulus, e.g. at least 50 N/tex, preferably at least 75 N/tex, more preferably 100 N/tex, most preferably at least 125 N/tex. Tensile strength, also simply referred to as strength, tenacity and modulus of fibers can be determined by known methods, as based on ASTM D2256-97.

The yarn of the invention has a titer of preferably at least 5 dtex, more preferably at least 10 dtex. For practical reasons, the titer of the yarns of the invention is at most several thousand dtex, preferably at most 2500 dtex, more preferably at most 2000 dtex. Yarns containing a plurality of fibers according to the invention preferably have a titer per fiber in the 0.2 - 25 dtex range, preferably 0.5-20 dtex. The titer of a yarn may also vary widely, for example from 20 to several thousand dtex, but is preferably in the range of about 30-4000 dtex, more preferably 40-3000 dtex.

It was observed that the yarn of the invention may have properties that makes it suitable for use in medical application; therefore in a preferred embodiment, the titer of the yarn of the invention is between 5 dtex and 400 dtex, more preferably between 10 dtex and 250 dtex, most preferably between 20 dtex and 150 dtex. The lowest titers of 5-30 dtex are particularly advantageous for medical applications as they facilitate application in medical methods involving minimum invasive techniques. Preferably the titer of the individual filaments forming said yarn is between 0.2 dtex and 100 dtex, more preferably between 0.4 dtex and 2 dtex, most preferably between 0.4 dtex and 1.2 dtex. Very high titers of individual filaments of 30-100 dtex are particularly advantageous in applications as monofilaments, whereas very low titers of individual filaments are particularly advantageous in applications for multifilament yarns in applications involving minimum invasive techniques. It was further observed that the advantages of the invention were obtained also for such low titer of individual filaments, in spite of the fact that such filaments have a larger surface that is exposed to the environments, e.g. body fluids and tissue.

The PO used in accordance with the present invention is ultrahigh molecular weight polyethylene (UHMWPE). By UHMWPE is herein understood a polyethylene having an intrinsic viscosity (IV) as measured on solution in decalin at 135°C, of at least 5 dl/g. Preferably, the IV of the UHMWPE is at least 10 dl/g, more preferably at least 15 dl/g, most preferably at least 21 dl/g. Preferably, the IV is at most 40 dl/g, more preferably at most 30 dl/g, even more preferably at most 25 dl/g.

According to the invention, a stabilizer is present inside the fiber body. By stabilizer is herein understood a compound which contributes to the stabilization of one or more fiber properties, e.g. mechanical properties such as tensile strength, elongation at break and modulus but also other chemical or physical properties such as bio-degradability, UV resistance and the like. By stabilization of a fiber property is herein meant that said compound contributes in maintaining that property within acceptable limits during a set period of time. For example when tenacity of the fiber is used as the property to be maintained, by stabilization is herein understood that the tenacity of the fiber after exposure to the damaging environment, e.g. UV-light exposure, is lowered to at most 80% of the initial tenacity of the fiber, i.e. the tenacity before exposure, within a period of exposure of about 150 hours, more preferably of about 500 hours, even more preferably of about 1000 hours, yet even more preferably of about 1500 hours, most preferably of about 3000 hours. The stabilizer is present in an amount of at least 0.1 parts by weight based on 100 parts by weight of the amount of the polyolefin polymer forming the fiber body. Preferably, said stabilizer's amount is at most 10, more preferably at most 8, even more preferably at most 6, yet even more preferably at most 5, most preferably at most 3 parts by weight based on
100 parts by weight of the amount of the polyolefin polymer forming the fiber body.

Stabilizers suitable for the invention are hindered amine stabilizers (HAS). Preferably, the HAS are used as light stabilizers as it was observed that such stabilizers may provide the fibers of the invention with suitable UV resistance. Although, HAS are known as light stabilizers for polyolefins, it was hitherto impossible to incorporate them in a sufficient amount in fibers such that these stabilizers would effectively protect said fibers.

It was also surprisingly observed that HAS interfered to a lesser extent than other stabilizers with the gel-spinning process of making a gel-spun fiber. While when using various stabilizers in said process, the spinning parameters, e.g. spinning tension, drawing patterns, polymer concentration and type, etc., needed to be re-adjusted to accommodate for the addition of said stabilizers, it was observed that when using HAS, essentially the same spinning parameters as for a conventional gel-spinning process, i.e. without stabilizers, could have been used. In other words, essentially no re-adjustment of the spinning parameters is needed when using HAS.

The invention therefore also relates to a gel-spinning process for manufacturing a gel-spun fiber containing a stabilizer, comprising the steps of: i) providing a solution comprising an UHMWPE; a solvent for said polymer; and a stabilizer; ii) extruding said solution through a spinneret to form at least one filament, preferably to form a yarn comprising a plurality of filaments; and extracting the solvent and drawing said filament or yarn before, during or after said extraction of the solvent; wherein said stabilizer is a HAS.

Preferred HAS compounds include those of the following general formulas or combinations thereof; 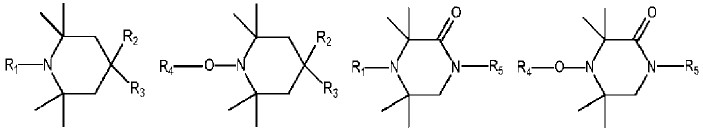 wherein R1 up to and including R5 are independent substituents; for example containing hydrogen, ether, ester, amine, amide, alkyl, alkenyl, alkynyl, aralkyl, cycloalkyl and/or aryl groups, which substituents may in turn contain functional groups, for example alcohols, ketones, anhydrides, imines, siloxanes, ethers, carboxyl groups, aldehydes, esters, amides, imides, amines, nitriles, ethers, urethanes and any combination thereof.

Preferably the HAS is a compound derived from a substituted piperidine compound, in particular any compound which is derived from an alkyl-subtituted piperidyl, piperidinyl or piperazinone compound or a substituted alkoxypiperidinyl. Other suitable HAS are those that are derivatives of 2,2,6,6-tetramethyl piperidine.

It has been surprisingly found by the present inventors that a more efficient incorporation of HAS into the PO fibers can be achieved when the HAS have a molecular weight of at least 450 g/mol, more preferably at least 1000 g/mol, more preferably at least 1250 g/mol, even more preferably at least 1500 g/mol.

Also preferred are HAS containing a group via which the HAS can be grafted to the PO.

Preferred specific examples of HAS include: 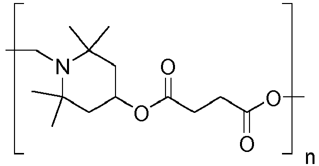 wherein n is preferably from 1 to 50. Such compound may be obtained by the reaction of dimethyl succinate with 4-hydroxy-2,2,6,6-tetramethyl-1-piperidine ethanol. Such compound is known as Dimethyl succinate polymer with 4-hydroxy-2,2,6,6-tetramethyl-1-piperidine ethanol; 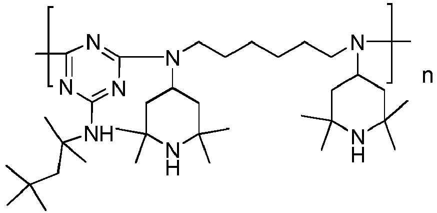 wherein n is preferably from 1 to 50. Such compound is known as Poly{[[6-[(1,1,3,3-tetramethylbutyl)amino]-s-triazine-2,4-diyl][(2,2,6,6-tetramethyl-4-piperidinyl)imino]hexamethylene [(2,2,6,6-tetramethyl-4-piperidinyl) imino]]}; 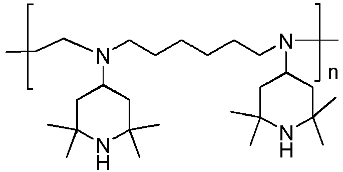 wherein n is preferably from 1 to 50. Such compound is known as Poly[[(2,2,6,6-tetramethyl-4-piperidinyl)imino]-1,2-ethanediyl[(2,2,6,6-tetramethyl-4-piperidinyl)imino]-1,6-hexanediyl; 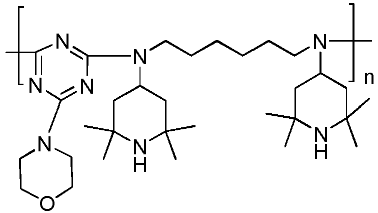 wherein n is preferably from 1 to 50. Such compound is known as Poly[(6-morpholino-s-triazine-2,4-diyl)[2,2,6,6-tetra-methyl-4-piperidyl)imino]-hexamethylene[(2,2,6,6 tetramethyl-4-piperidyl)imino]];

A particularly preferred HAS compound is: 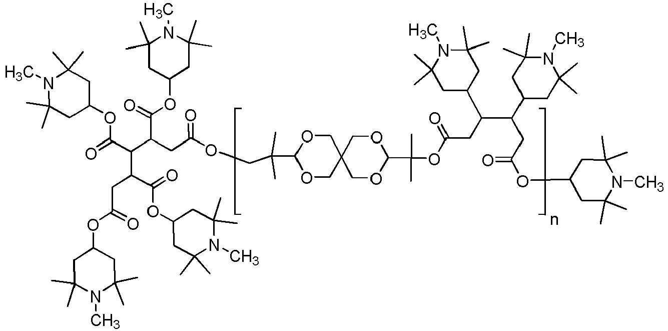 wherein n is preferably from 1 to 50. Such compound is known as 1,2,3,4-Butanetetracarboxylic acid, polymer with β, β, β', β'-tetramethyl-2,4,8,10-tetraoxaspiro[5.5]undecane-3,9-diethanol, 1,2,2,6,6-pentamethyl-4-piperidinyl ester;

Also a preferred HAS compound is 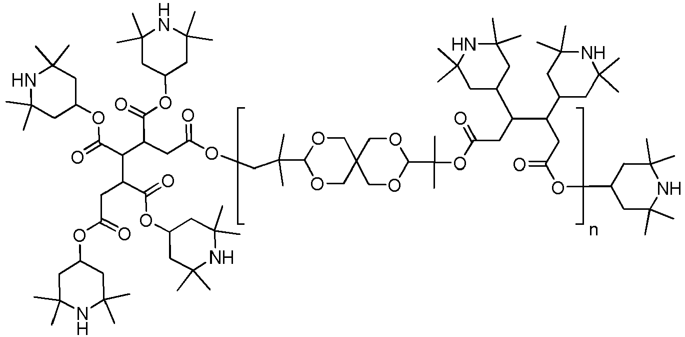 wherein n is preferably from 1 to 50. Such compound is known as 1,2,3,4-Butanetetracarboxylic acid, polymer with β, β, β', β'-tetramethyl-2,4,8,10-tetraoxaspiro [5.5]undecane-3,9-diethanol, 2,2,6,6-tetramethyl-4-piperidinyl ester;

Further suitable HAS compounds include: 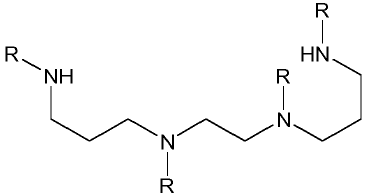 wherein 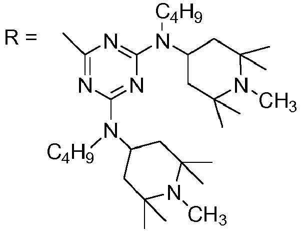 such compound being known as 1,3,5-Triazine-2,4,6-triamine, N,N"'-[1,2-ethanediylbis [[[4,6-bis[butyl(1,2,2,6,6-pentamethyl-4-piperidinyl)amino]-1,3,5-triazine-2-yl]imino]-3,1-propanediyl]]-bis[N',N"-dibutyl-N',N"-bis(1,2,2,6,6-pentamethyl-4-piperidinyl). 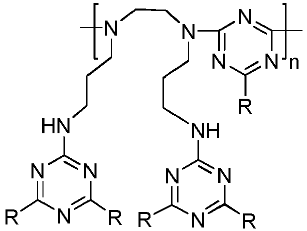 wherein 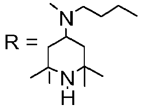 and wherein n is preferably from 1 to 50. Such compound is known as 1,3-Propanediamine, N,N-1,2-ethanediylbis-,polymer with 2,4,6-trichloro-1,3,5-triazine, reaction products with N-butyl-2,2,6,6-tetramethyl-4-piperidinamine; 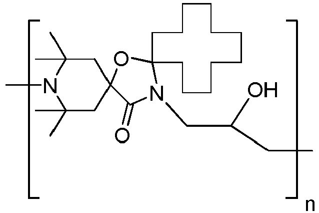 wherein n is preferably from 1 to 50. Such compound is known as 2,2,4,4-Tetramethyl-7-oxa-20-(oxiranylmethyl)-3,20-diazadispiro(5.1.11.2)henicosan-21-one; 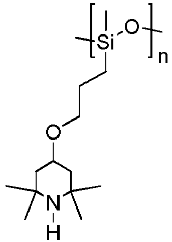 wherein n is preferably from 1 to 50. Such compound is known as poly[oxy[methyl[3-[(2,2,6,6-tetramethyl-4-piperidinyl)oxy]propyl]silylene]] Poly-methylpropyl-3-oxy[4(2,2,6,6-tetramethyl)-piperidinyl]-siloxane; 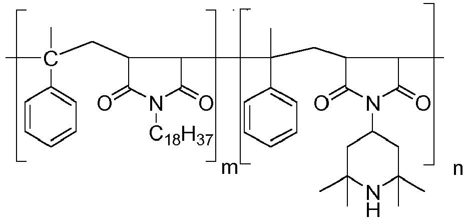 wherein both m and n are preferably from 1 to 50. Such compound is a copolymer of α-methyl-styrene and N-(2,2,6,6-tetra-methyl-piperidinyl)-4-maleimide and n-stearyl maleimide. 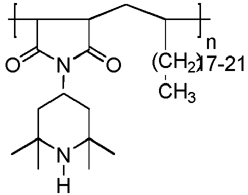 wherein n is preferably from 1 to 50. 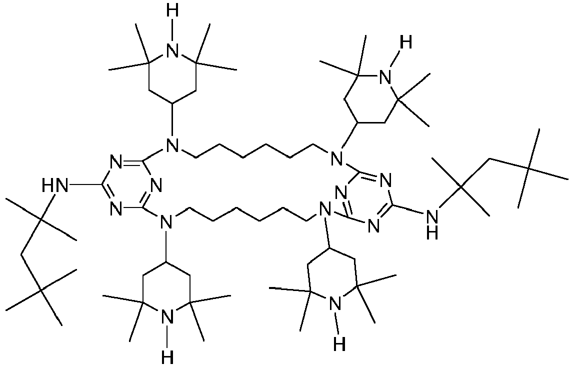 known as 2,9,11,13,15,22,24,26,27,28-Decaazatricyclo[21.3.1.110,14]octacosa-1(27),10,12,14(28),23,25-hexaene-12,25-diamine,N,N'-bis(1,1,3,3-tetramethylbutyl)-2,9,15,22-tetrakis(2,2,6,6-tetramethyl-4-piperidinyl). 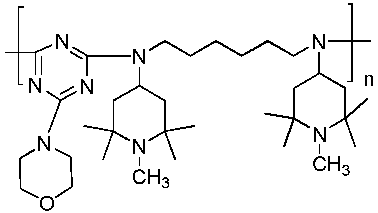 wherein n is preferably from 1 to 50. Such compound is known as poly[(6-morpholino-s-triazine-2,4-diyl)[1,2,2,6,6-penta-methyl-4-piperidyl)imino]-hexamethylene[(1,2,2,6,6 penta-methyl-4-piperidyl)imino]]; 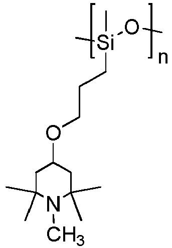 wherein n is preferably from 1 to 50. Such compound is known as poly-methoxypopyl-3-oxy[4(1,2,2,6,6-pentamethyl)-piperidinyl]-siloxane. 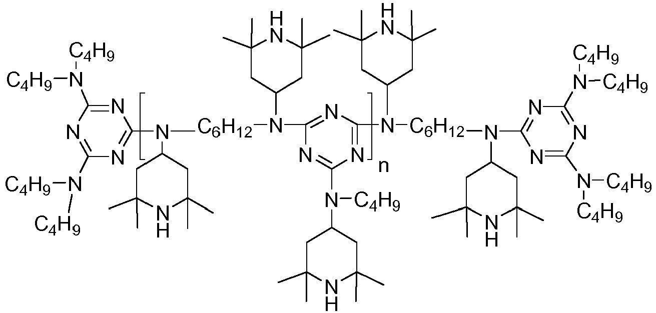 wherein n is preferably from 1 to 50. Such compound is known as 1,6-Hexanediamine, N, N'-bis(2,2,6,6-tetramethyl-4piperidinyl)-polymer with 2,4,6-trichloro-1,3,5-triazine, reaction products with N-butyl-1-butanamine and N-butyl-2,2,6,6-tetramethyl-4-piperidinamine. 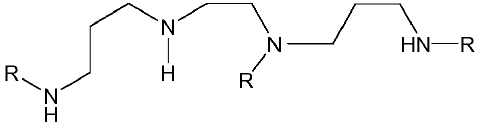 wherein
R= 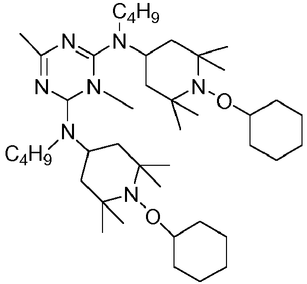 Such compounds may be reaction products of N, N'-ethane -1,2-diylbis (1,3-propanediamine), cyclohexane, peroxidized 4-butylamino-2,2,6,6-tetramethylpiperidine and 2,4,6-trichloro-1,3,5- triazine; 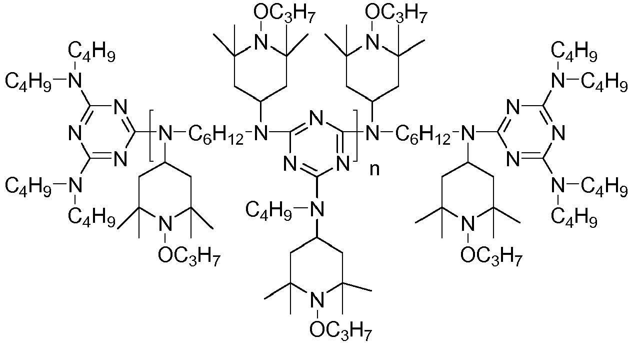 wherein n is preferably from 1 to 50. Such compound is known as 1,6-hexanediamine, N,N'-bis(2,2,6,6-tetramethyl -4-piperidinyl)-, polymer with 2,4,6-trichloro-1,3,5-triazine, reaction products with 3-bromo-1-propene, n-butyl-1- butanamine and N-butyl-2,2,6,6-tetramethyl-4-piperidinamine, oxidised, hydrogenated. 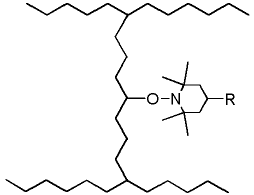 wherein R is a fatty acid.

Also preferred are HAS containing a group via which the HAS can be grafted to the PO. A suitable example thereof include 2-Butenedioic acid (E)-, bis(2,2,6,6-tetramethyl-4-piperidinyl) ester polymer with 1-propene:
Graft of 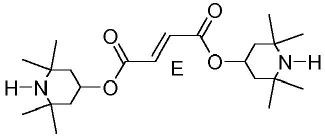 on PP which may be for example grafted on polypropylene.

Also the HAS known as Poly[[6-[(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidinyl)imino]]) and having the formula: 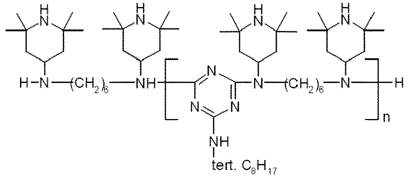 is preferred for utilization in accordance with the invention, the Mₙ thereof being preferably between 2000 and 3100.

The HAS used in accordance with the invention are preferably soluble in the solvent used for the PO, e.g. decalin. Preferably the HAS has a solubility of at least 1g/l of the solvent used in step a) at a temperature of 21°C. more preferably the stabilizer has a solubility of at least 10g/l.

Preferred examples of HAS suitable for the present invention include conventional compounds having such a structure that all hydrogen atoms attached to carbon atoms at the positions 2 and 6 of piperidine are substituted by methyl groups. Concrete examples include:
(1) Bis(2,2,6,6-tetramethyl-4-piperidyl)sebacate
(2) Tetrakis(2,2,6,6-tetramethyl-4-piperidyl)-1,2,3,4-butanetetracaboxylate
(3) 2,2,6,6-Tetramethyl-4-piperidyl benzoate
(4) Bis(1,2,2,6,6-pentamethyl-4-piperidyl)-2-(3,5-t-butyl-4-hydroxybenzyl)-2-n-butylmalonate
(5) Bis(N-methyl-2,2,6,6,-tetr0amethyl-4-piperidyl)sebacate
(6) 1,1-(1,2-Ethanediyl)bis(3,3,5,5-tetramethyl)piperazinone
(7) (2,2,6,6-Tetramethyl-4-piperidyl/tridecyl)-1,2,3,4-butanetetracarboxylate
(8) (1,2,2,6,6-Pentamethyl-4-piperidyl/tridecyl)-1,2,3,4-butanetetracaboxylate
(9) {2,2,6,6-Tetramethyl-4-piperidyl/ß,ß,ß',ß'-tetramethyl-3,9-[2,4,8,10-tetraoxasprio(5,5)-undecane]diethyl}-1,2,3,4-butanetetracarboxylate
(10) {1,2,2,6,6-Pentamethyl-4-piperidyl/ß,ß,ß',ß'-tetramethyl-3,9-[2,4,8,10-tetraoxasprio(5,5)-undecane]diethyl}-1,2,3,4-butanetetracarboxylate
(11) N,N'-Bis(3-aminopropyl)ethylenediamine-2,4-bis-[N-butyl-N-(1,2,2,6,6-pentamethyl-4-piperidyl)amino]-6-chloro-1,3,5-triazine condensate
(12) [N-(2,2,6,6-tetramethyl-4-piperidyl)-2-methyl-2-(2,2,6,6-tetramethyl-4-piperidyl)imino]propionamide.

All of the above mentioned HAS may be used either alone or in a combination with each other.

A further type of stabilizers suitable for use in the present invention include UV absorbers, i.e. stabilizers which preferentially absorb the incident UV radiation and dissipate the associated energy in a harmless manner to the UHMWPO such as transformation into longer wavelength less energetic radiation, heat and the like. Preferably the main absorbtion peaks of said UV absorbers are between 250 nm and 400 nm, more preferably between 300 nm and 350 nm. Preferred UV absorbers are those belonging to the benzophenones class, hydroxyphenyl triazine class and benzotriazoles class. Most preferred UV absorbers are those belonging to the hydroxyphenyl benzotriazoles class, e.g. Tinuvin 234 from BASF. It was also observed that excellent advantages may be obtained by using a stabilizer comprising a UV absorber and a HAS, preferably in a wt% ratio of between 0.5 and 1.5, more preferably between 0.8 and 1.2, most preferably of about 1.

For medical applications, it is highly advantageous that the stabilizer is suitable for implantation in the sense that the stabilizer or the fiber comprising the stabilizer is bio compatible. Particularly, it was found that fibers comprising natural phenolic antioxidants (and more particularly Vitamin E) and certain HAS stabilizers (particularly the class of stabilizers comprising e.g. Chimassorb® 944, available from BASF Corporation) may exhibit suitable bio-compatible properties.

Another aspect of the invention concerns a medical device comprising the above-mentioned bio-compatible gel-spun UHMWPE fiber. Preferably the medical device is a suture, a cable, a braid construction, a weave construction, a mesh, a membrane, a valve (particularly a heart valve), a (stent) graft, a (balloon) catheter, a pacing lead, or another device for a cardiovascular application, an orthopedic application, or a spine application.

By a bio-compatible fiber is herein meant that the fiber passes ISO 10993 testing.

Another important factor for medical applications of the fiber comprising the stabilizer is that the content of residual spinning solvent should be below 500 ppm, preferably below 100 ppm and more preferably below 50 ppm.

The present invention also relates to a gel-spinning process for manufacturing the fibers of the invention, said process comprising at least the steps of (a) preparing a solution comprising a PO, a hindered amine stabilizer and a suitable solvent for PO; (b) extruding said solution through a spinneret to obtain a gel fiber containing said PO, said stabilizer and said solvent for PO; and (c) extracting by evaporation the solvent from the gel fiber to obtain a solid fiber, wherein the PO is UHMWPE and the solvent is decalin or a derivative thereof. Preferably the stabilizer has a solubility of at least 1g/l of the pure solvent used in step a) at a temperature of 21°C. More preferably the stabilizer has a solubility of at least 10g/l. The amount of stabilizer in the solution of step a) is preferably at least 0.1 wt% of the total weight of the polymer, more preferably at least 0.3 wt%, most preferably at least 0.6 wt%. It was observed that with the process of the invention, most of the stabilizer used in the solution is found in the manufactured fiber; and thus the process of the invention may allow for a more effective dosing of the stabilizer. Preferably said amount of the stabilizer in solution is at most 25 wt%, more preferably at most 20 wt%, most preferably at most 15 wt%. Preferably, the evaporation is carried out under an inert gas, e.g. N₂, more preferably in air. The gel-spinning process may also optionally contain a drawing step wherein the gel fiber and/or the solid fiber are drawn with a certain draw ratio. An advantage of the gel-spinning process is that it can be carried out at low temperatures, below the melting point of the UHMWPO, saving therefore energy while being safe. Gel spinning processes are known in the art and are disclosed for example in WO 2005/066400; WO 2005/066401; WO 2009/043598; WO 2009/043597; WO 2008/131925; WO 2009/124762; EP 0205960 A, EP 0213208 A1, US 4413110, GB 2042414 A, GB-A-2051667, EP 0200547 B1, EP 0472114 B1, WO 2001/73173 A1, EP 1,699,954 and in *"*Advanced Fibre Spinning Technology", Ed. T. Nakajima, Woodhead Publ. Ltd (1994), ISBN 185573 182 7.

In a further aspect, the invention relates to a fiber comprising a polymer forming a fiber body, wherein a stabilizer is present inside the fiber body, characterized in that said fiber has a tensile strength retention of at least 50% after UV light exposure for at least 2000 hours in accordance with the method described in ISO 4982-2. The specific conditions of ISO 4982-2 are detailed hereinafter in the METHODS OF MEASUREMENT section. Preferably said fiber has a strength retention of at least 60%, more preferably of at least 70%, most preferably of at least 80%. Preferably the strength retention is after utilization during at least 2500 hours, more preferably during at least 3000 hours. The amount of said stabilizer is between 0.1 and 10 parts by weight based on 100 parts by weight of the amount of the polymer forming said fiber body. Said polymer is UHMWPE. Preferably said fiber is a gel-spun UHMWPE fiber. Said stabilizer is HAS, more preferably said stabilizer comprises a HAS and a UV absorber, most preferably, said stabilizer comprises a HAS and a UV absorber from the class of hydroxyphenyl benzotriazoles.

In a yet further aspect, the invention relates to a fiber comprising a polymer forming a fiber body, said polymer having an intrinsic viscosity (IV) as measured on the polymer contained by said fiber, wherein a stabilizer is present inside the fiber body, characterized in that said IV of said polymer decreases when testing the fiber in accordance with ISO 10993-13 for 60 days in 3% H₂O₂ at 70°C with at most 60 %, more preferably with at most 50 %, even more preferably with at most 30 %, yet more preferably with at most 15 %, most preferably with at most 10%. The amount of said hindered amine stabilizer is between 0.1 and 10 parts by weight based on 100 parts by weight of the amount of the polymer forming said fiber body, wherein said polymer is UHMWPE. Preferably said fiber is a gel-spun fiber, more preferably a gel-spun UHMWPE fiber. Preferably, said stabilizer is selected out of the group of stabilizers, consisting of those mentioned herein above . The intrinsic viscosity of a polymer may be measured if not indicated otherwise using ASTM D2857-95(2007) and the referrals indicated therein.

The fibers of the invention containing the stabilizer can be used in any application where such fibers are normally applied. In particular the fibers can be used in architectural textiles, ropes, fishing lines and fishing nets, and cargo nets, straps, and restraints in shipping and aviation, gloves and other protective apparel. Thus in one respect the invention relates to an article, preferably a rope, a glove, a protective apparel, a fishing line, a net, or a medical device comprising the fibers of the invention. Examples of relevant medical devices are sutures, cables, braid constructions, weave constructions, mesh constructions, membranes, valves (particularly heart valves), (stent) grafts and other devices for cardiovascular and orthopedic applications, (balloon) catheters, spine applications, and pacing leads. Medical devices that would gain the greatest advantage by incorporating the fiber according to the first aspect of the invention are devices that should retain the properties for extended implant time such as devices for spine applications and devices for cardiovascular applications, e.g. valves.

The invention will be further explained in detail with the help of the following examples and comparative experiments without being however limited thereto.

### METHODS OF MEASUREMENT:

- IV for UHMWPE: the Intrinsic Viscosity is determined according to method PTC-179 (Hercules Inc. Rev. Apr. 29, 1982) at 135 °C in decalin, the dissolution time being 16 hours, with BHT (Butylated Hydroxy Toluene) as anti-oxidant in an amount of 2 g/l solution, by extrapolating the viscosity as measured at different concentrations to zero concentration;
- Dtex: fibers' titer (dtex) was measured by weighing 100 meters of fiber. The dtex of the fiber was calculated by dividing the weight in milligrams to 10;
- Tensile properties of fibers: tensile strength (or strength) and tensile modulus (or modulus) are defined and determined on multifilament yarns as specified in ASTM D885M, using a nominal gauge length of the fibre of 500 mm, a crosshead speed of 50 %/min and Instron 2714 clamps, of type "Fibre Grip D5618C". On the basis of the measured stress-strain curve the modulus is determined as the gradient between 0.3 and 1 % strain. For calculation of the modulus and strength, the tensile forces measured are divided by the titre, as determined by weighing 10 metres of fibre; values in GPa are calculated assuming a density of 0.97 g/cm³.
- Tensile properties of fibers having a tape-like shape: tensile strength, tensile modulus and elongation at break are defined and determined at 25 °C on tapes of a width of 2 mm as specified in ASTM D882, using a nominal gauge length of the tape of 440 mm, a crosshead speed of 50 mm/min.
- Elongational stress (ES) of an UHMWPE is measured according to ISO 11542-2A
- The tensile strength retention was determined by measuring the tensile strength of the fiber as described hereinabove, after exposing the fiber for a set number of hours to UV light in accordance with the ISO 4982-2 method. The following specific conditions were used with the method described by ISO 4982-2:for UV exposure: a Xenon lamp of 6500 W was used with borosilicate filters, having an intensity of 0.35 W/m² at 340 nm; a rain cycle consisting of a 108 minutes dry period and a 12 minutes wet period, wherein the dry period had a humidity of the environment of about 50% and the wet period had a humidity of about 100%; and a back panel temperature of about 63°C.
- Bio stability was investigated with an accelerated test (3% H₂O₂ at 70°C) as described in ISO 10993-13: Biological evaluation of medical devices - Part 13: Identification and quantification of degradation products from polymeric medical devices.
- The amount of stabilizer (in wt%) in the fiber is based on 100 parts by weight of the mass fiber.
- The amount of stabilizer in the fiber was determined by the well-established FT-IR spectroscopy. A powder sample of the polymer used to manufacture the fiber therefrom was used to press a film (typically 600 microns thickness) and its IR spectrum was recorded. Subsequently, the IR spectrum of films (having the same thickness as the above) pressed from the above mentioned powder and also containing known amounts of stabilizers (typically 0.05 wt%, 0.1 wt% and 0.15 wt%) were also recorded. The film samples of the above were compared to determine the peaks given by the presence of the stabilizer. From these the intensities of the highest peak (at a representative wavelength) of the stabilizer in the samples containing thereof were represented versus the concentration of the stabilizer and the data was linearly fitted to obtain as so-called calibration line. Normalization can also be carried out to ensure for a higher accuracy, e.g. in case films having different thicknesses are analyzed. For this normalization the most intense peaks adjacent on both sides to the highest peak (at the representative wavelength) can be used. Subsequently, a film having the same thickness as the above was pressed from the polymeric fibers containing the stabilizer in the amount to be determined. Such film is hereinafter referred to as fibrous-film. The IR spectrum of the fibrous-films was determined and the height of the peak given by the stabilizer recorded at the representative wavelength was compared with the calibration line. From the calibration line the amount of stabilizer was determined. Care was taken throughout the procedure to compress under the same temperature and pressure conditions films having the same thickness. Alternatively, for comparing the IR spectrum of films having different thicknesses, normalization to the peak corresponding to a polymer specific vibration can be carried out. The skilled person in the art of FT-IR is aware of such procedure as the peaks corresponding to polymer specific vibrations can be found in standard FT-IR textbooks. Typically, this is the peak of the polymer which is the least sensitive to e.g. crystallization effects and other different physical properties of the polymer, e.g. molecular weight, branches, etc. In case combination of stabilizers are used in the fiber, the above detailed calibration procedure is applied to obtain calibration lines for each of the specific stabilizers, and afterwards from the ratios of the peaks at certain concentration and that of the used concentrations, the data can be routinely extrapolated to obtain at least the total amount of the combination of stabilizers in the fiber.
- As an example of the above, the amount of Chimassorb 944 in a UHMWPE fiber has been determined as follows: an amount of fibers was pressed with a pressure of 20 MPa at a temperature of 200 °C; the amount being chosen to yield a 600 micron thick film. A transmission spectrum of the film was recorded, followed by normalization. For normalization the 2018 cm⁻¹ peak was used (reference; Braco at all, Polymer 46 (2005); 10645-10657); The peak intensity between 1980 cm⁻¹ and 2100 cm⁻¹ was normalized to 0.5 with a zero point at 1980 cm⁻¹. The peak height at 1530 cm⁻¹ was used for calculation, using the peaks at 1545 cm⁻¹ and 1518 cm⁻¹ as baseline points. The stabilizer concentration was calculated from the peak height using a calibration line. The calibration line was calculated from linear regression of the peak heights at 1530 cm⁻¹ of four pressed UHMWPE powder samples (same as the one used to manufacture the fiber), which contain 0 wt%; 0.05 wt%; 0.1 wt% and 0.15 wt.% of Chimassorb 944, respectively. The calibration samples have been prepared by blending the UHMWPE powder with a solution of the Chimassorb 944 in acetone; whereby the solution to powder ratio was at least 1:10. After evaporation of the acetone, the UHMWPE powders with different Chimassorb 944 concentrations were consolidated under a pressure of 20 MPa at a temperature of 200 °C and 600 micron films were obtained using a microtome.
- Here also further examples of peaks that can be used to determine the amount of stabilizers such as e.g. Tinuvin® 765 and 770 , may be determined using the peaks at 1728 cm⁻¹ and using the peaks at 1750 cm⁻¹ and 1710 cm⁻¹ as baseline points for normalization.

### COMPARATIVE EXPERIMENTS

Fibers produced in accordance with WO 2005/066400 and spun from a solution containing about 9 wt% UHMWPE (IV between 15 and 16 dl/g) and 0.6 wt% stabilizer based on the amount of the polymer, were subjected to an extraction step in accordance with EP 0 343 863. The extraction was carried out first with n-decane at 110 °C, subsequently with triethylene glycol (TEG) at 145 °C and subsequently several times with water at room temperature. The details of the extraction process and the type and amount of stabilizer left in the fiber after the extraction is presented in Table 1.

**Table 1:**

| Comp. Exp. No. | Stabilizer | Extraction time n-decane (min) | Extraction time TEG (min) | Extraction time H₂O (min) | %wt stabilizer after extraction |
|---|---|---|---|---|---|
| 1 | Chimassorb ® 944¹ | 60 | 60 | 3 x 45 | 0.005 |
| 2 | Chimassorb ® 944¹ | 15 | 15 | 3 x 45 | 0.013 |
| 3-5 | Tinuvin® 234⁴/770²/76 5² | 15 | 15 | 3 x 45 | < 0.01³ |

| | | | | | |
|---|---|---|---|---|---|
| ¹ high molecular weight hindered amine stabilizer available from BASF Corporation ² hindered amine stabilizer, available from BASF Corporation. ³ the measured value was below the 0.01 detection limit of the FT-IR device for the used stabilizer. Note that the detection limit varies with the type of the stabilizer. ⁴ High molecular weight ultraviolet light absorber of the hydroxyphenyl benzotriazole class, available from BASF Corporation | | | | | |

### EXAMPLES 1-8

A number of yarns were prepared by gel spinning fibers in accordance with the process similar to that of WO 2005/066401 from a solution containing a stabilizer, UHMWPE (IV between 15 and 16 dl/g) and decalin as solvent for UHMWPE. The decalin was subsequently extracted by evaporation under nitrogen atmosphere. Each of the yarns was drawn to a linear density of about 110 dtex. The following stabilizers were used in the concentrations as set forth in Table 2

**Table 2:**

| Example No. | Stabilizer | %wt stabilizer before decaline extraction (used in the solution) | %wt stabilizer after decaline extraction |
|---|---|---|---|
| 1 | Chimassorb® 944 | 0.6 | 0.55 |
| 2 | Chimassorb® 944 | 0.3 | 0.3 |
| 3 | Chimassorb® 944 | 0.15 | 0.1 |
| 4 | Tinuvin® 234 | 0.6 | > 0.4 |
| 5 | Tinuvin® 234 and Chimassorb® 944 | 0.6 (0.3 each) | > 0.5 |
| 6 | Chimassorb® 966¹ | 0.3 | > 0.2 |
| 7 | Tinuvin® 770 | 0.6 | 0.5 |
| 8 | Tinuvin® 765 | 0.6 | 0.5 |

| | | | |
|---|---|---|---|
| ¹ high molecular weight hindered amine stabilizer previously available from Ciba Specialty Chemicals | | | |

### a. UV resistance

Some of the yarns were tested for UV-resistance according to ISO4982-2 over a maximum of 120 days. It was determined that the retention of tensile strength of a fiber sample produced in accordance with the Examples but containing no stabilizer showed a linear decrease in strength after 700 hours, and total loss of strength at around 3000 hours. Examples 1 (0.6wt% Chimassorb® 944) and 4 (0.3wt% Chimassorb® 944 + 0.3wt% Tinuvin® 234) in contrast showed much better long term performance with a residual tensile strength of about 80% at 3000 hours.

The UV resistance of all yarns was tested by measuring the UV exposure time needed for the yarns to reach 80% of their initial tenacity value. The results are presented in Table 3 (with higher values being better).

**Table 3**

| Example No. | Time until the tenacity was decreased to 80% of its original value (h) |
|---|---|
| Comparative (no stabilizer) | 120 |
| 1 | 1500 |
| 2 | 1000 |
| 3 | 500 |
| 4 | 850 |
| 5 | > 3000 |

### EXAMPLES 9-15

Fibers were obtained using the methodology described in the Examples 1-6 with the difference that the concentration of the stabilizer in the solution was 0.6 wt% and the evaporation was carried out in air. Also different stabilizers were used except for Examples 13-15. The results are presented in Table 4:

**Table 4**

| Example No. | Stabilizer | Time until the tenacity was decreased to 80% of its original value (h) |
|---|---|---|
| Comparative | None | 1000 |
| 9 | Tinuvin® 770 | > 3000 |
| 10 | Tinuvin® 765 | > 3000 |
| 11 | Tinuvin® NOR 371¹ | 2250 |
| 12 | Cyasorb® UV38² | 2900 |
| 13 | Tinuvin® 234 | 850 |
| 14 | Tinuvin® 234 (0.3%) and Chimassorb® 944 (0.3%) | 2500 |
| 15 | Chimassorb® 944 | 2600 |

| | | |
|---|---|---|
| ¹ High molecular weight hindered amine stabilizer available from BASF Corporation ² Hindered amine light stabilizer available from Cytec Industries Inc | | |

### b. Weathering

Samples from examples 1 and 4 were tested for relative intrinsic viscosity at 1400 hours of weathering. The results are provided in Table 5 below. Example 1 showed a drop in intrinsic viscosity after 1400 hours, whereas example 3 showed no drop in intrinsic viscosity.

**Table 5:**

| Example No. | Intrinsic Viscosity at 0hrs | Intrinsic Viscosity at 1400hrs |
|---|---|---|
| 1 | Between 15 and 16 | 9.4 |
| 3 | Between 15 and 16 | 15.6 |

### c. Bio-stability

A sample of Example No. 1 was tested for bio-stability as described above. As reference material was used a medical grade UHMWPE multifilament yarn. The sample of Example 1 and the reference material were subjected to 3% H₂O₂ at 70°C for 60 days, and weight and intrinsic viscosity (as described above) were established after 0, 2, 7 and 60 days.

Results of intrinsic viscosity are found in Table 6, where it is observed that the intrinsic viscosity of the reference sample decreased dramatically in the accelerated test whereas the intrinsic viscosity of the sample of Example 1 surprisingly remained constant under the harsh conditions of the accelerated bio stability test.

**Table 6:**

| Example No. | Intrinsic Viscosity at 0hrs | Intrinsic Viscosity at 60 days |
|---|---|---|
| Reference | Between 16 and 17 | Between 5 and 6 |
| 1 | Between 16 and 17 | Between 16 and 17 |

### EXAMPLES 16-22

Fibers were obtained using the methodology described in the Examples 1-8 with various concentrations of the stabilizers as detailed hereinbelow and with the difference that the evaporation was carried out in air. Some concentrations were calculated based on a predicted curve obtained by plotting the measured concentrations of Examples 1-8 and 16-19 and fitting them with an appropriate curve. The measured amounts are presented in Table 7a. The bio-stability of the fibers was tested as described above, the results being presented in Table 7b.

**Table 7a**

| Example No. | Stabilizer | %wt stabilizer before decaline extraction (used in the solution) | %wt stabilizer after decaline extraction analyzed by FT-IR |
|---|---|---|---|
| 16 | Chimassorb® 944 | 0.05 | 0.01 |
| 17 | Chimassorb® 944 | 0.1 | 0.04 |
| 18 | Chimassorb® 944 | 0.2 | 0.10 |
| 19 | Chimassorb® 944 | 0.3 | 0.13 |

**Table 7b**

| Ex | Stabilizer | Conc. (wt%) | Intrinsic Viscosity (dl/g) | | | | Decrease in IV after 60 days (%) |
|---|---|---|---|---|---|---|---|
| | | | 0 days | 2 days | 7 days | 60 days | |
| Comp | None | none | 16.4 | 15.2 | 13.8 | 5.0 | 70 |
| 16 | Chimassorb® 944 | 0.05 | 16.5 | 16.7 | 16.9 | 14.8 | 10 |
| 17 | Chimassorb® 944 | 0.1 | 16.6 | 16.8 | 16.9 | 15.6 | 6 |
| 18 | Chimassorb® 944 | 0.2 | 16.4 | 16.4 | 16.1 | 14.4 | 12 |
| 19 | Chimassorb® 944 | 0.3 | 16.3 | 15.6 | 15.6 | 14.9 | 9 |
| 20 | Irganox®³ 1010 | 0.05 | 17.0 | 16.7 | 16.2 | 12.2 | 28 |
| 21 | Irganox® 1010 | 0.1 | 17.1 | 17.1 | 16.5 | 12.5 | 27 |
| 22 | Tinuvin® 770 | 0.6 | 16.6 | 16.7 | 16.7 | 15.5 | 7 |

| | | | | | | | |
|---|---|---|---|---|---|---|---|
| ³ Irganox 1010 is a sterically hindered penolic antioxidant having the formula Pentaerythritol Tetrakis(3-(3,5-di-tert-butyl-4-hydroxyphenyl)propionate) from BASF Corporation. | | | | | | | |

It should be observed that the used test is an accelerated bio stability in vitro test and that the results therefore not necessarily reflect the behaviour of gel-spun polyolefin fibers of the invention implanted in the human body under normal conditions.

### d. Influence on the spinning process

The effect of the stabilizer on the spin tension of the gel-spinning process used to manufacture the fibers of Examples 16-21 was taken as a representative factor to show the influence of said stabilizer on said process. The results are presented in Table 8 for various concentrations of the stabilizers.

**Table 8**

| Stabilizer | Concentration (wt%) See Table 7b | Spin tension (cN) |
|---|---|---|
| None | none | 281 |
| Chimassorb® 944 | 0.05 | 275 |
| Chimassorb® 944 | 0.1 | 274 |
| Chimassorb® 944 | 0.2 | 253 |
| Chimassorb® 944 | 0.3 | 243 |
| Irganox® 1010 | 0.05 | 391 |
| Irganox® 1010 | 0.1 | 448 |

From Table 8 it can be seen that HAS have very little influence on the spin tension even at relatively high concentrations.

## Claims

1. A high performance gel-spun fiber with a tenacity of at least 1.5 N/tex comprising a polyolefin polymer forming a fiber body, wherein the polyolefin is ultrahigh molecular weight polyethylene (UHMWPE), wherein a stabilizer is present inside the fiber body, **characterized in that** the stabilizer is a hindered amine stabilizers (HAS) and the amount of said stabilizer is between 0.1 and 10 parts by weight based on 100 parts by weight of the amount of the polyolefin polymer forming said fiber body.

2. The fiber of any one of the preceding claims having a tensile modulus of at least 50 N/tex.

3. The fiber of any one of the preceding claims having a titer in the range of 5 to 2500 dtex.

4. The fiber of any one of the preceding claims wherein the content of residual spinning solvent is below 500 ppm.

5. The fiber of any one of the preceding claims wherein the amount of stabilizer is between 0.1 and 5 parts by weight.

6. The fiber of any one of the preceding claims wherein the stabilizer is a hindered amine stabilizers (HAS) having a molecular weight of at least 500 g/mol.

7. The fiber of any one of the preceding claims wherein the stabilizer is a hindered amine stabilizers (HAS) which is soluble in decalin at a level of at least 1 g/l of the solution of decalin.

8. An architectural textile, a rope, a fishing line or a fishing net, a cargo net, a strap, a restraint in shipping or aviation or a medical device containing the fiber according to any one of the preceding claims.

## Patentansprüche

1. Hochleistungsgelspinnfaser mit einer Feinheitsfestigkeit von mindestens 1,5 N/tex, umfassend ein einen Faserkörper bildendes Polymer des Typs Polyolefin, wobei es sich bei dem Polyolefin um ultrahochmolekulares Polyethylen (UHMWPE) handelt, wobei im Faserkörper ein Stabilisator enthalten ist, **dadurch gekennzeichnet, dass** es sich bei dem Stabilisator um einen solchen des Typs gehindertes Amin (HAS) handelt und er in einer auf 100 Gewichtsteile des den Faserkörper bildenden Polymers des Typs Polyolefin bezogenen Menge zwischen 0,1 und 10 Gewichtsteilen vorliegt.

2. Faser nach einem der vorhergehenden Ansprüche mit einem Zugmodul von mindestens 50 N/tex.

3. Faser nach einem der vorhergehenden Ansprüche mit einem Titer im Bereich von 5 bis 2500 dtex.

4. Faser nach einem der vorhergehenden Ansprüche, bei der der Gehalt an restlichem Spinnlösungsmittel weniger als 500 ppm beträgt.

5. Faser nach einem der vorhergehenden Ansprüche, bei der die Stabilisatormenge zwischen 0,1 und 5 Gewichtsteilen liegt.

6. Faser nach einem der vorhergehenden Ansprüche, bei der es sich bei dem Stabilisator um einen solchen des Typs gehindertes Amin (HAS) mit einem Molekulargewicht von mindestens 500 g/mol handelt.

7. Faser nach einem der vorhergehenden Ansprüche, bei der es sich bei dem Stabilisator um einen solchen des Typs gehindertes Amin (HAS) mit einer Decalinlöslichkeit von mindestens 1 g/l der Decalinlösung handelt.

8. Die Faser gemäß einem der vorhergehenden Ansprüche enthaltende Bautextilien, Seile, Angelschnüre und -netze, Frachtnetze, -gurte und -arretierungen in Schiff- und Luftfahrt sowie medizintechnische Produkte.

## Revendications

1. Fibre haute performance filée à l'état de gel ayant une ténacité d'au moins 1,5 N/tex, comprenant un polymère de polyoléfine formant un corps de fibre, la polyoléfine étant un polyéthylène à ultra-haute masse moléculaire (UHMWPE), un stabilisant étant présent à l'intérieur du corps de fibre, **caractérisée en ce que** le stabilisant est un stabilisant de type amine encombrée (HAS) et la quantité dudit stabilisant est de 0,1 à 10 parties en poids relativement à 100 parties en poids de la quantité du polymère de polyoléfine formant ledit corps de fibre.

2. Fibre selon l'une quelconque des revendications précédentes, ayant un module en traction d'au moins 50 N/tex.

3. Fibre selon l'une quelconque des revendications précédentes, ayant un titre de 5 à 2 500 dtex.

4. Fibre selon l'une quelconque des revendications précédentes, dans laquelle la teneur en solvant de filage résiduel est inférieure à 500 ppm.

5. Fibre selon l'une quelconque des revendications précédentes, dans laquelle la quantité de stabilisant est de 0,1 à 5 parties en poids.

6. Fibre selon l'une quelconque des revendications précédentes, dans laquelle le stabilisant est un stabilisant de type amine encombrée (HAS) ayant une masse moléculaire d'au moins 500 g/mol.

7. Fibre selon l'une quelconque des revendications précédentes, dans laquelle le stabilisant est un stabilisant de type amine encombrée (HAS) qui est soluble dans la décaline à un niveau d'au moins 1 g/l de la solution de décaline.

8. Textile architectural, corde, ligne de pêche ou filet de pêche, filet pour fret, courroie, dispositif de retenue utilisé dans les transports ou en aviation, ou dispositif médical contenant la fibre selon l'une quelconque des revendications précédentes.
